## Europäisches Patentamt

### European Patent Office

### Office européen des brevets

(11) Veröffentlichungsnummer: **0 098 427**
**B1**

(12) # EUROPÄISCHE PATENTSCHRIFT

(45) Veröffentlichungstag der Patentschrift:
12.03.86

(51) Int. Cl.⁴: **C 01 B 15/017**

(21) Anmeldenummer: **83105914.2**

(22) Anmeldetag: **16.06.83**

(54) **Verfahren zur Herstellung wasserfreier, organischer Wasserstoffperoxidlösungen.**

(30) Priorität: **07.07.82 DE 3225307**

(43) Veröffentlichungstag der Anmeldung:
**18.01.84 Patentblatt 84/3**

(45) Bekanntmachung des Hinweises auf die Patenterteilung:
**12.03.86 Patentblatt 86/11**

(84) Benannte Vertragsstaaten:
**AT BE CH DE FR GB IT LI NL SE**

(56) Entgegenhaltungen:
**DE - A - 2 038 319**
**DE - A - 2 041 124**
**DE - B - 1 262 982**
**DE - B - 2 038 320**
**DE - B - 2 125 159**
**FR - A - 2 018 153**
**FR - A - 2 070 119**
**FR - A - 2 090 242**
**GB - A - 931 119**

(73) Patentinhaber: **Degussa Aktiengesellschaft,
Weissfrauenstrasse 9, D-6000 Frankfurt am Main 1 (DE)**

(72) Erfinder: **Drauz, Karlheinz, Dr. Dipl.-Chem.,
Flurstrasse 5, D-6463 Freigericht 1 (DE)**
Erfinder: **Kleemann, Axel, Dr. Dipl.-Chem.,
Greifenhagenstrasse 25, D-6450 Hanau 9 (DE)**
Erfinder: **Wirthwein, Rolf, Dr. Dipl.-Chem.,
Fürstenbergstrasse 4, D-6450 Hanau 9 (DE)**

## Beschreibung

Es ist bekannt, dass der Wassergehalt von Wasserstoffperoxidlösungen bei vielen Reaktionen, z. B. bei Oxydationen oder Epoxydationen, störend ist, s. z. B. „Org. Reactions", 7, 395 (1953).

So wurde schon früh versucht, anstelle von rein wässerigen Lösungen von Wasserstoffperoxid entsprechende organische Lösungen einzusetzen.

Bei der Herstellung derartiger Lösungen zeigten sich jedoch Schwierigkeiten:

Im allgemeinen werden zur Gewinnung organischer Wasserstoffperoxidlösungen wässerige Lösungen von Wasserstoffperoxid als Ausgangsmaterial eingesetzt und entweder mit der gewünschten organischen Verbindung nur vermischt und anschliessend durch Destillation entwässert, oder aber die wässerigen Lösungen wurden mit der organischen Verbindung extrahiert und ggf. entwässert.

In beiden Fällen wurden zwar organische Lösungen von Wasserstoffperoxid erhalten, deren Wassergehalt aber stets bei ungefähr 1 Gew.-% oder mehr lag, s. z. B. DE-PS Nrn. 2038319 und 2038320 sowie US-PS Nr. 3743706, GB-PS Nr. 931119.

Dabei wurde nach den Verfahren der DE-PS Nrn. 2038319 und 2038320 versucht, das in den organischen Lösungen vorhandene Wasser durch Destillation bei vermindertem Druck, oder auch durch azeotrope Destillation mit einem zusätzlichen Schleppmittel zu entfernen.

Beim Verfahren der US-PS Nr. 3743706 sollte das Extraktionsmittel selbst als Schleppmittel für eine Azeotropdestillation benutzt werden können. Nähere Einzelheiten fehlen aber.

Auch in der GB-PS Nr. 931119 wurde der Mischungspartner zum azeotropen Abdestillieren des Wassers eingesetzt. Nun zeigte sich aber bei der Herstellung organischer Wasserstoffperoxidlösungen aus wässerigen Lösungen neben dem oftmals zu hohen Gehalt an Wasser noch ein weiterer wesentlicher Nachteil:

Während der Wasserentfernung bei den dort verwendeten Drucken wurde ein bestimmter Prozentsatz an Wasserstoffperoxid mit dem Destillat herausgeschleppt, der bei grosstechnischer Durchführung zu wirklichen Verlusten an Wasserstoffperoxid führte.

Ausserdem traten weitere Verluste durch Zersetzung im Sumpf auf.

Bei den Verfahren der DE-PS Nrn. 2038319 und 2038320 wurden organische Phosphorverbindungen bzw. heterocyclische Stickstoffverbindungen eingesetzt, bei den Verfahren der GB-PS Nr. 931119 und US-PS Nr. 3743706 aliphatische oder cycloaliphatische Ester.

Während in der US-PS Nr. 3743706 keine Angaben über die Durchführung einer Azeotropdestillation vorhanden sind, wird bei den Verfahren der anderen drei genannten Patentschriften bei Drucken weit unter 100 mbar gearbeitet, s. die Beispiele.

Zwar wurde in den beiden deutschen Patentschriften ganz allgemein ein Druckbereich genannt, der unterhalb 400 mbar lag, beim Nacharbeiten mit Triäthylphosphat bzw. N-Methylpyrrolidon jedoch bei Drucken von 400 bzw. 100 mbar wurden in Destillaten Wasserstoffperoxidmengen von 0,28 bzw. 0,6 und 0,26 bzw. 0,8 Gew.-%, in beiden Fällen bezogen auf das Destillat, gefunden; ausserdem trat ein zusätzlicher Verlust an Wasserstoffperoxid von 7,5 bzw. 4,1 und 4,7 bzw. 3,9 Gew.-%, bezogen auf das eingesetzte Wasserstoffperoxid, auf. Rechnet man die durch die Destillatmenge ausgetragene und durch die Zersetzung verlorene Wasserstoffperoxidmenge zusammen, so lagen bei einer Destillation bei 400 bzw. 100 mbar die Gesamtverluste bei mindestens 7-8 Gew.-% an eingesetztem Wasserstoffperoxid. Wird aber wesentlich tiefer, d. h. weit unter 100 mbar destilliert, so befinden sich erklärlicherweise noch weit höhere Mengen an Wasserstoffperoxid im Destillat, die bis über 1 Gew.-%, bezogen auf das Destillat, gehen können; bei diesen Drucken, die als bevorzugt gelten, werden aber die Beispiele durchgeführt, s. loc. cit.

Auch bei der Verwendung von aliphatischen Estern als Lösungsmittel für Wasserstoffperoxid wurde die azeotrope Entwässerung bei Drucken, die weit unterhalb 100 mbar lagen, durchgeführt, s. GB-PS Nr. 931119, Beispiel 1.

Beim Nacharbeiten der Herstellung einer Lösung von Wasserstoffperoxid in n-Propylacetat und der azeotropen Entwässerung dieser Lösung stellte sich heraus, dass das Destillat mehr als 0,5 Gew.-% an Wasserstoffperoxid enthielt bei einem Druck von $86,6593 \cdot 10^2$ Pa.

Nach dem Stand der Technik musste daher der Eindruck entstehen, dass eine destillative Trocknung von organischen Wasserstoffperoxidlösungen, die bei einem verminderten Druck ausgeführt wurde, zwangsläufig erhebliche Verluste an Wasserstoffperoxid bei grosstechnischer Durchführung zur Folge hatte.

Aber nicht nur der Verlust an Wasserstoffperoxid stellte einen erheblichen Nachteil der bisher bekannten Verfahren dar; es kam hinzu, dass die Destillationsrückstände in keiner Weise wasserfrei waren:

So hatten die phosphororganischer Lösungen z. B. Restwassergehalte, die zwischen 0,97 bis 9,5 Gew.-% lagen. Derartige Lösungen können aber nicht zur Oxydation bzw. Epoxydation eingesetzt werden.

Auch im einzigen Beispiel in der DE-PS Nr. 2038320 war der Wassergehalt 11,4 Gew.-% in der organischen Phase.

Aufgabe des erfindungsgemässen Verfahrens ist es also, eine Lösung von Wasserstoffperoxid in einem organischen Lösungsmittel herzustellen, bei deren Herstellung kein nennenswerter Verlust an eingesetztem Wasserstoffperoxid auftritt und deren Wassergehalt unter 0,5 Gew.-% liegt.

Es wurde nun gefunden, dass organische Lösungen von Wasserstoffperoxid, deren Wassergehalt kleiner als 0,5 Gew.-% ist, aus wässerigen Lösungen von Wasserstoffperoxid gewonnen werden können durch Vermischen der wässerigen Lösungen mit Carbonsäureestern, wenn man die wässerigen Wasserstoffperoxidlösungen mit Alkyl- oder Cycloalkylestern von gesättigten aliphatischen Carbonsäuren, die eine Gesamtkohlenstoffzahl von 4-8 besitzen und mit Wasser Azeotrope bilden, vermischt und die azeotrope Entwässerung bei Drucken zwischen 160 bis 1000 mbar durchführt.

Bevorzugt wird die Destillation bei 200 bis 1000 mbar ausgeführt.

Als bevorzugte Carbonsäureester werden genannt:

Von Essigsäure: die Ethyl- bis Hexylester.
Von Propionsäure: die Methyl- bis Pentylester.
Von Buttersäure: die Methyl- bis Butylester.
Von Valeriansäure: die Methyl- bis Propylester.
Von Capronsäure: der Methyl- und Ethylester sowie Pivalinsäuremethyl- und -ethylester.

Hierunter fallen auch sämtliche isomeren verzweigtkettigen Ester.

Es ist auch möglich, Gemische dieser Ester einzusetzen.

Da bei der erfindungsgemässen Herstellung praktisch wasserfreier organischer Wasserstoffperoxidlösungen die Entfernung des Wassers stets durch Azeotropbildung mit dem Lösungsmittel erfolgt, ist der Endpunkt der Entwässerung leicht festzustellen:

Sowie nämlich im Wasserabscheider, der der Destillationskolonne nachgeschaltet ist, keine Entmischung des Kondensates in Wasser und Lösungsmittel mehr stattfindet, sondern nur noch reines Lösungsmittel übergeht, ist die Entwässerung beendet.

Durch die erfindungsgemässe Kombination, die in der Verwendung der in Anspruch 1 genannten Ester, die mit Wasser ein niedrigsiedendes Azeotrop bilden, als Lösungsmittel und in der Durchführung der azeotropen Entwässerung bei den ebenfalls in Anspruch 1 angegebenen Drucken besteht, wird ein Übergehen von Wasserstoffperoxid in das Destillat sicher vermieden. Dies ist der grosse Vorteil gegenüber den Verfahren nach DE-PS Nrn. 2038319 und 2038320, bei denen eine homogene wässerig-organische Lösung vorliegt.

Die Mengen an Carbonsäureestern, die mit der wässerigen Wasserstoffperoxidlösung gemischt werden, sind an sich beliebig und richten sich nach dem gewünschten Gehalt von Wasserstoffperoxid in der organischen Lösung sowie nach der sicheren Handhabung dieser Lösungen.

Allerdings ist es auch möglich, da die genannten Ester unterhalb des Siedepunktes von Wasserstoffperoxid sieden, die nach der azeotropen Entwässerung angefallenen Lösungen durch Abdestillieren des Lösungsmittels noch weiter zu konzentrieren. Auch Lösungen, deren Wassergehalt möglicherweise durch eine Zersetzung des Wasserstoffperoxids angestiegen ist, lassen sich als solche oder erneut wieder entwässern und aufkonzentrieren.

Ein derartiges Aufkonzentrieren durch einfaches Abdestillieren des Lösungsmittels ist aber auf Grund des Siedepunktes der Lösungsmittel bei den organischen Wasserstoffperoxidlösungen entsprechend DE-PS Nrn. 2038319 und 2038320 nicht möglich.

Dieses Konzentrieren wird bei Drucken von 200 bis 1000 mbar vorgenommen.

Das einzusetzende wässerige Wasserstoffperoxid enthält normalerweise die üblichen Stabilisatoren, s. Ullmann, „Enzyklopädie der technischen Chemie", Bd. 17, 4. Aufl., S. 709.

Das erfindungsgemässe Verfahren arbeitet ohne jedes zusätzliche Schleppmittel; das anfallende Azeotrop aus Wasser und dem erfindungsgemäss einzusetzenden Lösungsmittel entmischt sich ohne Schwierigkeiten, so dass das anfallende Lösungsmittel sofort wieder einsatzfähig ist. Dies ist besonders günstig bei der kontinuierlichen Durchführung des Verfahrens. Aufwendige Aufarbeitungsvorgänge fallen dadurch fort.

Dies ist ein weiterer Fortschritt gegenüber den Verfahren der DE-PS Nrn. 2038319 und 2038320.

Das erfindungsgemässe Verfahren lässt sich in üblichen Destillationsvorrichtungen, wie Füllkörper- und Bodenkolonnen, durchführen.

Als Werkstoffe kommen alle Materialien in Frage, die gegenüber Wasserstoffperoxid inert sind, wie z. B. Glas, Emaille, Aluminium, passivierter Edelstahl, bestimmte Kunststoffe.

Der technische Fortschritt besteht einmal darin, dass organische Lösungen mit einem Wassergehalt, der kleiner als 0,5 Gew.-% ist, in einfacher Weise, z. B. ohne Zusatz weiterer Stoffe, hergestellt werden können.

Ferner lassen sich diese Lösungen ohne Zersetzungsverlust konzentrieren, wobei auch ggf. noch ein Entwässerung stattfindet.

Ausserdem treten bei der Herstellung dieser organischen Wasserstoffperoxidlösungen praktisch keine Verluste an Wasserstoffperoxid auf.

Ausserdem sind die erfindungsgemäss hergestellten Lösungen bemerkenswert stabil.

Die nachfolgenden Beispiele sollen das Verfahren weiter erläutern.

*Beispiel 1:*

Zu einer Lösung von 539,8 g $H_2O_2$ in 230,2 g $H_2O$ (entspricht einer 70,1 gew.-%igen wässerigen $H_2O_2$-Lösung) gibt man 890,0 g Essigsäuren-propylester mit einem Wassergehalt von 0,5 Gew.-% (entspricht 4,45 g $H_2O$) und destilliert bei einem Vakuum von 250 mbar über eine 80 cm lange, mit Glasfüllkörpern und einem Wasserabscheider versehene Glaskolonne insgesamt 234,0 g Wasser und 431,5 g Ester ab.

Die Sumpftemperatur steigt dabei von anfangs 62 auf 76° C an, die Kopftemperatur erreicht einen maximalen Wert von 47° C.

Das abdestillierte Wasser hat einen $H_2O_2$-Gehalt von 0,02 Gew.-%. Ein Wasserstoffperoxidgehalt im abdestillierten Ester ist nicht nachweisbar.

Als Rückstand erhält man 997,5 g einer 53,95 gew.-%igen Lösung von $H_2O_2$ in Essigsäure-n-propylester. Der Restwassergehalt beträgt 1,65 g, entsprechend 0,16 Gew.-%. Das wässerige Kondensat wird verworfen, der abdestillierte Essigsäure-n-propylester zurückgewonnen.

*Beispiel 2:*

Von 600,0 g einer 53,9 gew.-%igen wasserfreien Lösung von $H_2O_2$ in Essigsäure-n-propylester, hergestellt nach Beispiel 1, werden bei 250 mbar 124,5 g reiner Essigsäure-n-propylester abdestilliert.

Im Destillationssumpf verbleiben eine Lösung von 323,0 g $H_2O_2$ in 152 g Ester, was einer 68,0 gew.-%igen wasserfreien Lösung von $H_2O_2$ in Essigsäure-n-propylester darstellt.

Beispiel 2 zeigt also, dass sich niedriger konzentrierte organische Lösungen von Wasserstoffperoxid einfach aufkonzentrieren lassen.

*Beispiel 3:*

Zu einer Lösung von 819,0 g $H_2O_2$ in 351 g Wasser (entspricht einer 70,0 gew.-%igen wässerigen $H_2O_2$-Lösung) gibt man 1500 g Essigsäureisopropylester mit einem Wassergehalt von 0,05 Gew.-% (entspricht 0,75 g Wasser) zu und destilliert bei einem Vakuum von 300-280 mbar analog Beispiel 1 insgesamt 351,2 g $H_2O$ und 552,2 g Ester ab.

Die Sumpftemperatur lag dabei zwischen 60 und 62°C, die Kopftemperatur erreicht einen maximalen Wert von 44°C. Das abdestillierte Wasser hat einen $H_2O_2$-Gehalt von < 0,01 Gew.-%, der abdestillierte Ester wies kein $H_2O_2$ auf.

Als Rückstand erhält man 1777 g einer 46,09 gew.-%igen Lösung von $H_2O_2$ in Essigsäureisopropylester. Der Restwassergehalt beträgt 0,559 g, entsprechend 0,031 Gew.-%.

*Beispiel 4:*

Zu einer Lösung von 406,7 g $H_2O_2$ in 172,6 g $H_2O$ (entspricht einer 70,2 gew.-%igen wässerigen $H_2O_2$-Lösung) gibt man 667,5 g Essigsäureethylester mit einem Wassergehalt von 0,02 gew.-% (entspricht 0,13 g $H_2O$) zu und destilliert bei einem Vakuum von 600 mbar – analog Beispiel 1 – 172,0 g $H_2O$ ab. Im Verlauf der Azeotropdestillation werden nochmals 348,0 g Essigsäureethylester mit einem Anteil von 0,07 g $H_2O$ zugegeben und der Druck auf 400 mbar abgesenkt. Bei diesem Druck beträgt die Sumpftemperatur am Ende 73°C, die Kopftemperatur 40°C. Es werden insgesamt 558,3 g Essigsäureethylester abdestilliert.

Das abdestillierte Wasser hat einen $H_2O_2$-Gehalt von < 0,01 gew.-%; der abdestillierte Ester war frei von Wasserstoffperoxid.

Als Rückstand erhält man 964,9 g einer 42,1 gew.-%igen Lösung von $H_2O_2$ in Essigsäureethylester. Der Restwassergehalt beträgt 0,8 g, entsprechend 0,083 gew.-%.

*Beispiel 5:*

Von 550,5 g einer 42,1 gew.-%igen wasserfreien Lösung von $H_2O_2$ in Essigsäureethylester – hergestellt nach Beispiel 4 – werden bei 400 mbar 178,0 g reiner Essigsäureethylester abdestilliert.

Im Destillationssumpf verbleiben 231,7 g $H_2O_2$ in 140,7 g Ester, was einer 62,2 gew.-%igen wasserfreien Lösung von $H_2O_2$ in Essigsäureethylester entspricht. Auch diese niedriger konzentrierte Wasserstoffperoxidlösung liess sich in einfacher Weise aufkonzentrieren.

*Beispiel 6:*

Zu einer Lösung von 406,6 g $H_2O_2$ in 172,6 g $H_2O$ (entspricht einer 70,2 gew.-%igen wässerigen $H_2O_2$-Lösung) gibt man 879,5 g Propionsäuremethylester mit einem Wassergehalt von 1,78 gew.-% (entspricht einem Anteil von 15,7 g $H_2O$) und destilliert bei einem Vakuum von 600 bis 400 mbar insgesamt 188,0 g $H_2O$ und 361,8 g Ester ab.

Die Sumpftemperatur steigt von anfangs 56 auf 73°C an, das Azeotrop geht bei 39-44°C über. Das abdestillierte Wasser hat einen $H_2O_2$-Gehalt von < 0,01 gew.-%; der abdestillierte Ester war frei von Wasserstoffperoxid.

Als Rückstand erhält man 920,7 g einer 43,78 gew.-%igen Lösung von $H_2O_2$ in Propionsäuremethylester. Der Restwassergehalt beträgt 0,3 g, entsprechend 0,03 gew.-%.

*Beispiel 7:*

Zu einer Lösung von 406,5 g $H_2O_2$ in 171,4 g $H_2O$ (entspricht einer 70,34 gew.-%igen wässerigen $H_2O_2$-Lösung) gibt man 1157,7 g Propionsäureethylester mit einem Wassergehalt von 0,085 gew.-% (entspricht 0,98 g $H_2O$) zu und destilliert insgesamt 172,0 g $H_2O$ und 709,2 g Ester bei einem Druck von 200 mbar ab.

Die Sumpftemperatur steigt von anfange 56,5 auf 66,5°C an. Das abdestillierte Wasser hat einen $H_2O_2$-Gehalt von 0,01 gew.-%; Wasserstoffperoxid konnte im abdestillierten Ester nicht nachgewiesen werden.

Als Rückstand erhält man 850,8 g einer 47,3 gew.-%igen Lösung von $H_2O_2$ in Propionsäureethylester. Der Restwassergehalt beträgt 0,38 g, entsprechend 0,04 gew.-%.

*Beispiel 8:*

Zu einer Lösung von 405,9 g $H_2O_2$ in 174,0 g $H_2O$ (entspricht einer 70,0 gew.-%igen wässerigen $H_2O_2$-Lösung) gibt man 666,7 g Pivalinsäureethylester und 520,0 g Essigsäureethylester zu. Das Estergemisch hat einen Wassergehalt von 0,05 gew.-% (entspricht 0,59 g $H_2O$) und destilliert bei einem Vakuum von 600 mbar – analog Beispiel 4 – 173,5 g $H_2O$ und 273,7 g Ester ab.

Die Sumpftemperatur erreicht 72°C, die Kopftemperatur 39°C.

Das abdestillierte Wasser hat einen $H_2O_2$-Gehalt von < 0,01 gew.-%; der abdestillierte Ester war wasserstoffperoxidfrei.

Als Rückstand erhält man 1314,0 g einer 30,8 gew.-%igen Lösung von $H_2O_2$ in einem Gemisch Essigsäureethylester/Pivalinsäureethylester.

Der Restwassergehalt beträgt 1,1 g, entsprechend 0,08 gew.-%.

*Beispiel 9:*

Zu einer Lösung von 406,9 g $H_2O_2$ in 172,8 g $H_2O$ (entspricht einer 70,2 gew.-%igen wässeri-

gen $H_2O_2$-Lösung) gibt man 440,0 g Essigsäure-n-butylester und 622,6 g Essigsäure-n-propylester. Das Estergemisch hat einen Wassergehalt von 0,06 gew.-% (entspricht 0,5 g $H_2O$). Bei 250 mbar werden — analog Beispiel 1 — 314,1 g Ester und 172,5 g $H_2O$ abdestilliert.

Die Sumpftemperatur erreicht 78,5°C, die Kopftemperatur 46,5°C; das abdestillierte $H_2O$ hat einen $H_2O_2$-Gehalt von < 0,01 gew.-%; die abdestillierte, organische Phase war frei von Wasserstoffperoxid.

Als Rückstand erhält man 1155 g einer 35,12 gew.-%igen Lösung von $H_2O_2$ in einem Gemisch Essigsäure-n-propyl/Essigsäure-n-butylester.

Der Restwassergehalt beträgt 0,8 g, entsprechend 0,07 gew.-%.

*Beispiel 10:*

Stabilitätstest im Lagerversuch:

Wasserfreie Lösungen von $H_2O_2$ in gesättigten Carbonsäureestern werden 3 bzw. 6 Monate gelagert.

Jeweils 500 ml einer Lösung von $H_2O_2$ im Ester werden in einer 2-l-Kunststoffflasche (Polyethylen) bei Temperaturen zwischen 20 und 25°C gelagert.

Der $H_2O_2$-Gehalt wird zu Begin und am Ende der Lagerzeit potentiometrisch bestimmt.

### 6-Monate-Lagerversuch

| Lösungen von $H_2O_2$ in | $H_2O_2$-Konz. zu Beginn (Gew.-%) | $H_2O_2$-Konz. am Ende (Gew.-%) | Abnahme (Gew.-%) |
|---|---|---|---|
| Essigsäureethylester | 25,58 | 25,12 | 0,46 |
| Essigsäurepropylester | 28,00 | 27,63 | 0,37 |
| Essigsäure-n-butylester/ Essigsäure-n-propylester | 23,16 | 22,88 | 0,28 |
| Propionsäuremethylester | 31,10 | 30,59 | 0,51 |
| Propionsäureethylester | 29,57 | 29,11 | 0,46 |

### 3-Monate-Lagerversuch

| Lösungen von $H_2O_2$ in | $H_2O_2$-Konz. zu Beginn (Gew.-%) | $H_2O_2$-Konz. am Ende (Gew.-%) | Abnahme (Gew.-%) |
|---|---|---|---|
| Essigsäureethylester | 42,12 | 41,68 | 0,46 |
| Essigsäurepropylester | 53,39 | 52,91 | 0,48 |
| Essigsäure-n-butylester/ Essigsäure-n-propylester | 35,12 | 34,71 | 0,41 |
| Propionsäuremethylester | 43,78 | 43,25 | 0,53 |
| Propionsäureethylester | 47,28 | 46,89 | 0,39 |

Im Prinzip können alle wässerigen Wasserstoffperoxidlösungen bei dem erfindungsgemässen Verfahren eingesetzt werden. Als günstig erwiesen sich aber Lösungen von etwa 35-70 Gew.-%.

Bei geringer konzentrierten Lösungen muss zu viel Wasser abdestilliert werden und bei höher konzentrierten Wasserstoffperoxidlösungen könnten sicherheitstechnische Aspekte in Betracht kommen.

## Patentansprüche

1. Verfahren zur Herstellung von organischen Lösungen von Wasserstoffperoxid, deren Wassergehalt kleiner als 0,5 Gew.-% ist, aus wässerigen Lösungen von Wasserstoffperoxid durch Vermischen mit Carbonsäureestern, dadurch gekennzeichnet, dass man die wässerigen Wasserstoffperoxidlösungen mit Alkyl- oder Cycloalkylestern von gesättigten aliphatischen Carbonsäuren, die eine Gesamtkohlenstoffzahl von 4-8 besitzen und mit Wasser Azeotrope bilden, vermischt und die azeotrope Entwässerung bei Drucken zwischen 160 bis 1000 mbar durchführt.

2. Verfahren nach Anspruch 1, dadurch gekennzeichnet, dass man die azeotrope Entwässerung bei 200 bis 1000 mbar durchführt.

3. Verfahren nach den Ansprüchen 1-2, dadurch gekennzeichnet, dass man die nach der azeotropen Destillation anfallenden organischen Lösungen von Wasserstoffperoxid durch Abdestillieren des Lösungsmittels bei 200 bis 1000 mbar aufkonzentriert.

## Revendications

1. Procédé pour la préparation de solutions organiques de peroxyde d'hydrogène dont la teneur en eau est inférieure à 0,5% en poids, à partir de solutions aqueuses de peroxyde d'hydrogène, par mélange avec des esters d'acides carboxyliques, caractérisé par le fait que l'on mélange les solutions aqueuses de peroxyde d'hydrogène avec des esters alkyliques ou cycloalkyliques d'acides carboxyliques aliphatiques saturés qui possèdent un nombre total d'atomes de carbone de 4 à 8 et qui permettent des azéotropes avec l'eau, et que l'on effectue la distillation azéotrope à des pressions comprises entre 16 et 100 kPa (160 à 1000 mbar).

2. Procédé selon la revendication 1, caractérisé par le fait que l'on effectue la déshydratation azéotrope à une pression de 20 à 100 kPa (200 à 1000 mbar).

3. Procédé selon l'une des revendications 1 ou 2, caractérisé par le fait que, après la distillation azéotrope, on concentre les solutions organiques de peroxyde d'hydrogène obtenues en chassant le solvant par distillation à une pression de 20 à 100 kPa (200 à 1000 mbar).

## Claims

1. A process for the production of organic solutions of hydrogen peroxide, the water content of which is less than 0.5% by weight, from aqueous solutions of hydrogen peroxide by mixing with carboxylic acid esters, characterised in that the aqueous hydrogen peroxide solutions are mixed with alkyl or cycloalkyl esters of saturated aliphatic carboxylic acids which have a total number of carbon atoms of from 4 to 8 and form azeotropes with water, and in that water is removed azeotropically under a pressure of from 160 to 1,000 mbar.

2. A process according to Claim 1, characterised in that the water is removed azeotropically at from 200 to 1,000 mbar.

3. A process according to Claim 1 or 2, characterised in that the organic solutions of hydrogen peroxide which are formed following azeotropic distillation are concentrated by distilling off the solvent at from 200 to 1,000 mbar.